# EUROPEAN PATENT APPLICATION

(11) **EP 4 332 620 A1**
(43) Date of publication of application: **06.03.2024**
(21) Application number: 21939097.8
(22) Date of filing: 22.12.2021
(51) Int. Cl.: G01S 7/484, G01S 7/487, G01S 7/486

(54) **LIGHT DETECTION APPARATUS AND DETECTION METHOD**

(30) Priority: 30.04.2021 CN 202110489107; 31.05.2021 CN 202110606696
(71) Applicant: Hesai Technology Co., Ltd., Shanghai 201821 (CN)
(72) Inventor: ZHU, Xuezhou, Shanghai 201821 (CN); YANG, Jin, Shanghai 201821 (CN); ZENG, Zhaoming, Shanghai 201821 (CN); TAO, Jun, Shanghai 201821 (CN); XIANG, Shaoqing, Shanghai 201821 (CN); SUN, Kai, Shanghai 201821 (CN)
(74) Representative: Fish & Richardson P.C.
(86) International application number: PCT/CN2021/140287
(87) International publication number: WO 2022/227638

(57) **Abstract**

A light detection apparatus and detection method, the apparatus comprising: a light emitter array (111), a light detector array (121) and a control module. The light emitter array (111) comprises a plurality of light emitters (1111); the light emitters (1111) are configured to output emission signals; the light detector array (121) comprises a plurality of light detectors (1211); and the light detectors (1211) are configured to detect echo signals reflected after the emission signals encounter an obstacle. The light emitter array (111) and the light detector array (121) constitute a plurality of detection channels, and each detection channel comprises at least one light emitter (1111) and at least one light detector (1211). During a one-time signal transmission process from sending an emission signal to detecting a corresponding echo signal, the control module selects a plurality of predetermined light emitters (1111) to emit light at the same time, and the fields of view of the plurality of light emitters (1111) that emit light at the same time do not overlap within a detection distance, which effectively reduces crosstalk between the detection channels.

## Description

### CROSS REFERENCE TO RELATED APPLICATIONS

This disclosure claims priority to Chinese Patent Application No. 202110489107.7, filed on April 30, 2021, titled "Light Detection Device and Detection Method", and also claims priority to Chinese Patent Application No. 202110606696.2, filed on May 31, 2021, titled "Light Detection Device and Detection Method", the contents of which are incorporated herein by reference in their entirety.

### TECHNICAL FIELD

This disclosure relates to the technical field of optical ranging, especially to a light detection device and a detection method.

### BACKGROUND

A LiDAR is a device that detects external environment by emitting a laser and receiving an echo signal of the laser reaching and returning from the surface of an object. Therefore, the LiDAR may include a light transmission module and a light detection module.

Currently, the light transmission module of a LiDAR may include a laser array, which includes a plurality of lasers; and correspondingly, the light detection module may include a light detector array, which includes a plurality of light detectors. One detection channel is formed between at least one laser and at least one light detector, each detection channel corresponding to one field of view ("FOV"), also known as a field angle. Typically, the number of beams in the so-called multi-beam LiDAR corresponds to the number of detection channels.

However, based on the demand for a miniaturized system, the layout space for the laser array and light detector array may become very limited, which makes the layout of the lasers and the layout of the light detectors tight. At the time of scanning with a LiDAR, if the lasers work in parallel, and the light detectors also work in parallel, crosstalk among the detection channels can occur easily. For example, a detection channel A receives an echo signal of a detected point C that should be obtained in the field of view of a detection channel B, while the detected point C may be outside of the field of view of the detection channel A, which may cause point C to appear at a position in a detection result (e.g., in a point cloud map), where point C does not originally exist. Such a situation is called the "ghost" phenomenon.

Even through some time-sharing control of light emission and detection, it would still be difficult to effectively reduce the impact of crosstalk due to the need for high-frequency and high-speed detection in LiDAR application scenarios such as autonomous driving.

In particular, in the development of high-beam LiDARs, such as a LiDAR with more than 32 beams (e.g., 32 beams, 64 beams, 128 beams, 256 beams, or even more beams), which represents the trend of the mainstream product in the industry, the problem of crosstalk becomes a huge obstacle to the development of the products.

### SUMMARY

In view of the above disadvantages in the existing techniques, this disclosure provides a light detection device and a method for performing detection to solve the problems in the existing techniques.

To achieve the above objectives and other relevant objectives, the first aspect of disclosure provides a light detection device, comprising: a light emitter array, comprising a plurality of light emitters, the light emitters configured to output transmission signals; a light detector array, comprising a plurality of light detectors, the light detectors configured to detect echo signals of the transmission signals reflected off an obstacle; wherein the light emitter array and the light detector array constitute a plurality of detection channels, and each detection channel comprises at least one light emitter and at least one light detector; and a control module, wherein during one signal transmission process from outputting the transmission signal to detecting a corresponding echo signal, the control module selects a plurality of predetermined light emitters to emit light in parallel, and the fields of view of the plurality of light emitters that emit in parallel do not overlap within a detection distance.

In some embodiments of the first aspect, the light emitter array is a one-dimensional array or a two-dimensional array; wherein when the light emitter array is a two-dimensional array, a ratio between sizes of the two dimensions is greater than 3, or greater than 5.

In some embodiments of the first aspect, a plurality of detection channels in an operational state are formed between the plurality of activated light emitters in the light emitter array and a plurality of activated light detectors in the light detector array; the light emitter array comprises a plurality of banks of light emitters, and/or the light detector array comprises a plurality of banks light detectors; and the activated light emitters respectively belong to different banks of light emitters, and/or the activated light detectors respectively belong to different banks of light detectors.

In some embodiments of the first aspect, various light emitters in each bank of light emitters and/or various light detectors in each bank of light detectors are activated in turn during a plurality of signal transmission processes.

In some embodiments of the first aspect, there is a first isolation range between two light emitters in the same bank of light emitters; and/or, a second isolation range is formed between activated light detectors in two adjacent banks of light detectors during the same signal transmission process.

In some embodiments of the first aspect, each bank of light emitters comprises a predetermined number of light emitters, and a plurality of light emitters in the bank of light emitters are integrated on at least one chip.

In some embodiments of the first aspect, a plurality of light emitters in the bank of light emitters are coupled to at least one selector or selection unit, the selection unit is configured to select the light emitter according to an external signal.

In some embodiments of the first aspect, the light emitter array comprises N columns of light emitters staggered from one another, each column of light emitters extending in a first direction, with N being greater than 1; and/or, the light detector array comprises M columns of light detectors staggered from one another, each column of light detectors extending in the first direction, with M being greater than 1.

In some embodiments of the first aspect, during the same signal transmission process, signal characteristics of optical signals transmitted in various detection channels are not completely the same.

In some embodiments of the first aspect, the light detector comprise: a control module configured to determine whether the signal characteristic of the echo signal detected by the light detector matches a signal characteristic of a transmission signal of the light emitter in the detection channel associated with the light detector, and use the echo signal in the detection channel for calculating a distance from a target object when the signal characteristic matches the signal characteristic.

In some embodiments of the first aspect, the transmission signal emitted by the light emitter includes one or more pulse signals; dimensions of the signal characteristics include any combination of wavelength, pulse width, pulse number, pulse peak, or inter-pulse time interval.

In some embodiments of the first aspect, a signal characteristic in a dimension of pulse width includes: a ratio of pulse widths of a plurality of pulses, which is used to determine whether the signal characteristic of the echo signal matches the signal characteristic of the transmission signal.

In some embodiments of the first aspect, a signal characteristic in a dimension of signal intensity includes: a ratio of intensities of a plurality of pulses, which is used to determine whether the signal characteristic of the echo signal matches the signal characteristic of the transmission signal.

In some embodiments of the first aspect, wavelengths of transmission signals by light emitters in different operating detection channels during the same signal transmission process are different; and a filtering unit is disposed in front of light detector in the different operating detection channels, the filtering unit only allows the echo signal of a wavelength corresponding to this detection channel to pass through.

In some embodiments of the first aspect, the light detection device further includes: a control module configured to control the light emitter array and the light detector array to consecutively perform multiple detections for one detection channel during one transmission process to obtain ToF values, and compare the ToF values obtained in multiple detections to determine that a detection result for the detection channel is effective when the ToF values match upon comparison; otherwise, to discard the detection result.

In some embodiments of the first aspect, the light detection device includes a LiDAR.

In order to achieve the above objectives and other relevant objectives, the second aspect of the disclosure provides a method for performing light detection by a light detection device according to the first aspect, the method comprising: activating a plurality of light emitters in the light emitter array to send transmission signals; and activating a plurality of light detectors in the light detector array; wherein the plurality of activated light emitters form a plurality of detection channels in an operational state with a plurality of activated light detectors; and the activated light emitters respectively belong to different banks of light emitters and/or the activated light detectors respectively belong to different banks of light detectors.

To sum up, this disclosure provides a light detection device and a method for performing detection. In the light detection device, a light emitter array and a light detector array constitute a plurality of detection channels therebetween, each detection channel including at least one light emitter and at least one light detector. In one embodiment, one detection channel can consist of one light emitter and one light detector. In other embodiments, one detection channel can consist of one light emitter and several light detectors. Additionally, multiple manners of constituting a detection channel can also be used in the same embodiment. During one signal transmission process from sending a transmission signal to detecting a corresponding echo signal, a plurality of predetermined light emitters are selected to emit light at the same time, and the fields of view of the plurality of light emitters that emit light at the same time do not overlap within a detection distance, which enables sufficient spatial spacing exist among the detection channels operating at the same time to effectively reduce the crosstalk.

### BRIEF DESCRIPTION OF DRAWINGS

FIG. 1 to FIG. 3 show a structural schematic diagram of a LiDAR that may be implemented in a light detection device in various embodiments of this disclosure.
FIG. 4A shows a structural schematic diagram of a front-viewed arrangement of a light emitter array in an embodiment of this disclosure.
FIG. 4B shows a structural schematic diagram of a part of FIG. 4A in a left view.
FIG. 4C shows a structural schematic diagram of a division into banks of light emitters according to the example structure of FIG. 4A.
FIG. 4D shows a schematic diagram of one multi-detection-channels light emission by each bank of light emitters as divided according to FIG. 4C.
FIG. 5A shows a principle schematic diagram when wavelength is taken as a signal characteristic for detection in an embodiment of this disclosure.
FIG. 5B shows a waveform schematic diagram when pulse width is taken as a signal characteristic in an embodiment of this disclosure.
FIG. 5C shows a waveform schematic diagram in which inter-pulse time interval is taken as a signal characteristic in an embodiment of this disclosure.
FIG. 6 shows a schematic diagram of a circuit structure of a driving circuit of the light emitter array in an embodiment of this disclosure.
FIG. 7 shows a waveform schematic diagram in which trigger signals of the driving circuit use a pulse number as a signal characteristic of in an embodiment of this disclosure.
FIGS. 8A to 8D show different waveform schematic diagrams in which trigger signals of different banks of light emitters use pulse time interval as a signal characteristic in an embodiment of this disclosure.
FIG. 9 shows a waveform schematic diagram in which trigger signals in one detection channel use pulse width as a signal characteristic of in an embodiment of this disclosure.

### DETAILED DESCRIPTION OF EMBODIMENTS

The modes of implementation of this disclosure are explained below through particular and specific instances, and those skilled in the art can easily understand other advantages and benefits of this disclosure from the content disclosed in this specification. This disclosure can also be implemented or applied through other different specific modes of implementation. The details in this specification can also be modified or changed based on different perspectives and application systems without departing from the spirit of this disclosure. It need be noted that in the absence of conflicts, the embodiments in this disclosure and the features in the embodiments can be combined with each other.

Taking the drawings as a reference, a detailed explanation are provided for the embodiments of this disclosure, so that persons skilled in the relevant technical field of this disclosure can easily implement the same. This disclosure can be embodied in various forms and is not limited to the embodiments described here.

In order to clearly explain this disclosure, components irrelevant to the explanation have been omitted, and the same or similar constituent elements throughout the specification are denoted by the identical reference numerals.

Throughout the specification, when a certain component is "connected" to another component, this includes not only the case of "direct connection", but also the case of "indirect connection" by placing other elements therebetween. Additionally, when a certain component "includes" a certain constituent element, as long as there is no special record to the contrary, this does not exclude other constituent elements, but means that other constituent elements can also be included.

When a certain component is described to be "above" another component, it can be directly above another component, but can also be accompanied by other components between them. When a component is described in a comparative manner to be "directly" "above" another component, there are no other components accompanied between them.

Although terms such as first and second are used in some instances herein to describe various elements, these elements should not be limited by these terms. These terms are only used to distinguish one element from another, for example, descriptions of a first interface and a second interface. Further, as used herein, singular forms like "a", "one", and "the" are intended to also contain a plural form, unless otherwise instructed in the context. It should be further understood that terms like "contain" and "include" indicate the existence of the features, steps, operations, elements, parts, items, types, and/or groups as described, but do not exclude the existence, appearance, or addition of one or more other features, steps, operations, elements, parts, items, types, and/or groups. Terms like "or" and "and/or" used here are interpreted as inclusive, or mean any one or any combination. Therefore, "A, B, or C" or "A, B, and/or C" means "any one of the following: A; B; C; A and B; A and C; B and C; A, B, and C". Exceptions to this definition may occur only when the elements, functions, steps, or operations in a combination are inherently mutually exclusive in certain ways.

The professional terms used here are only for particular embodiments and are not intended to limit this disclosure. The singular form used here includes the plural form as long as no statement clearly indicates the contrary meaning. The meaning of "include" used in the specification is to concretize particular characteristics, regions, integers, steps, operations, elements, and/or ingredients, and does not exclude the existence or addition of other characteristics, regions, integers, steps, operations, elements, and/or ingredients.

Terms indicating relative space such as "below" and "above" can be used to more easily explain the relationship of one component with regard to another as illustrated in a drawing. Such terms refer to not only the meaning referred to in the drawing, but also other meaning or operations of the device in use. For example, if the device in a figure is inverted, which once described a certain component as "below" other devices, then it is described as "above" other devices. Therefore, the example term of the so-called "below" covers both "above" and "below". A device can rotate by 90° or other angles, and the term representing relative space is also explained accordingly.

Although not defined differently, all the terms including the technical and scientific terms used here have the same meaning as those generally understood by persons skilled in the relevant technical field of this disclosure. Where the terms defined in commonly used dictionaries are interpreted supplementarily as having the meaning consistent with the relevant technical literature and currently hinted content, they may not be excessively interpreted as ideal or very formulaic meaning as long as not defined.

As mentioned above, an increasing level of micro-integration based on a light emitter array and a light detector array may easily lead to crosstalk among detection channels during detection by a multi-beam LiDAR that uses them for detection. Although crosstalk can be reduced by means of time-sharing activation, the switching time between detection channels is too short based on the demand for a high-beam (more than 32 beams) LiDAR, making it difficult to effectively reduce crosstalk.

In view of this, this disclosure can provide a light detection device, including a light emitter array and a light receiver array. The light emitters and/or light detectors widely spaced from one another in the arrays can be selected and activated at the same time, which can effectively reduce crosstalk among detection channels. Moreover, it is also possible to directly poll the detection channels in sequence.

The light detection device can be implemented as a LiDAR. Further optionally, the LiDAR can be, for example, a mechanical LiDAR with a rotating mechanism. Alternatively, it may also be a LiDAR without a rotating mechanism.

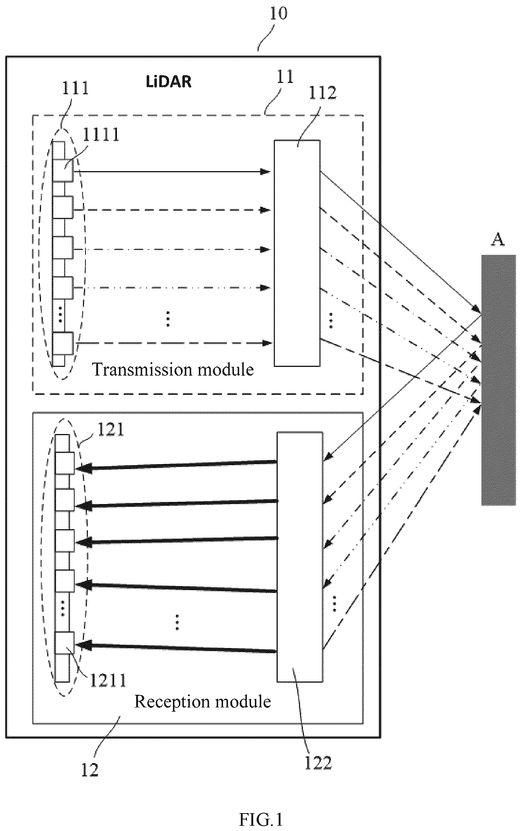

As shown in FIGS. 1 to 3, there are structural schematic diagrams of LiDARs that may be implemented in a light detection device in various embodiments of this disclosure.

In FIG. 1, there is shown a structural schematic diagram of a LiDAR 10 in an embodiment.

In this example, the LiDAR 10 includes a transmission module 11 and a light detection module 12, wherein the transmission module 11 includes a light emitter array 111 which includes a plurality of light emitters 1111. The detection module 12 includes a light detector array 121 which includes a plurality of light detectors 1211. In an embodiment, the light transmission module 11 can also include a driving circuit for the light emitter array 111; and the light detection module 12 can also include a circuit for processing echo signals (e.g., an analog-to-digital converter), which are not shown in the diagram or further described, as a signal transmission process of a transmission signal and an echo signal are showed here.

In FIG. 1, each light emitter 1111 outputs a transmission signal, and the transmission signal is emitted out of the LiDAR 10 after passing through a transmitting lens 112 (e.g., a shaping/collimation). When the transmission signal is reflected to form an echo signal after encountering an obstacle A, the echo signal enters the LiDAR 10 and is detected by respective light detector 1211 in the light detector array 121 after passing through a receiving lens 122 (e.g., a shaping/convergence). It can be understood that the diagram schematically shows one detection channel including one light emitter 1111 and one light detector 1211, where an echo signal formed by reflection of a transmission signal from one light emitter is detected by one light detector 1211. If there are N pairs of light emitters 1111 and light detectors 1211, N detection channels can be formed correspondingly, and each detection channel can correspond to different fields of view. Optionally, the fields of view among detection channels can be overlapping or non-overlapping.

This is only an example. In other embodiments, the number of light emitters 1111 and light detectors 1211 that make up a detection channel is not fixed, and at least one light emitter 1111 can form a detection channel with at least one light detector 1211. When a light emitter 1111 and a light receiver belonging to one detection channel are respectively activated to operate, this detection channel is in an operational state, thereby completing the detection of the obstacle A.

In some embodiments, each light emitter 1111 can be a laser, such as a vertical cavity surface emitting laser (or "VCSEL"), or an edge emitting laser (or "EEL"). Correspondingly, each light detector 1211 can be implemented as, for example, an avalanche photo diode (or "APD") or a silicon photomultiplier (or "SiPM"). Among them, the laser can be driven to emit light by applying a driving current to the laser; and the light detector 1211 implemented as an APD or a SiPM is activated to detect an optical signal by applying a bias voltage (V_{bias}) to the light detector 1211.

It need be noted that the optical paths depicted in FIG. 1 are only a schematic representation and do not actually limit the structures of the optical path for transmission signals and the optical path for echo signals inside the light detection device.

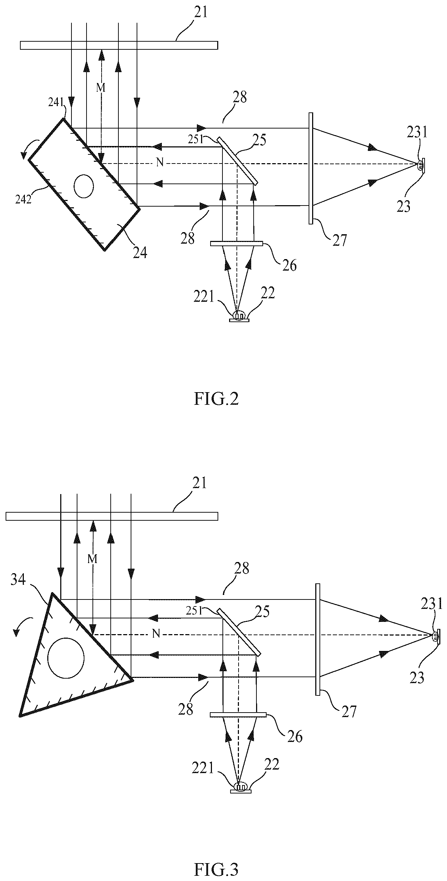

In FIG. 2, there is shown a structural schematic diagram of a LiDAR in another embodiment of this disclosure.

FIG. 2 shows an internal partial structure of the LiDAR in a transverse plane from a top view. For clarity, the housing of the light detection device is not shown in the diagram. The transverse plane can be a plane perpendicular to the height direction of the light detection device, which can be, for example, a horizontal plane or other planes.

The LiDAR includes a window 21, a light transmission end 22, a light detection end 23, a rotating member 24, a redirecting member 25, a transmitting lens 26, a receiving lens 27, and others. The LiDAR can be, for example, a forward-facing LiDAR, disposed as shown schematically in the figure, with the window 21 facing forward to perform detection.

The light transmission end 22 includes a light emitter array 221, light emitters therein are used for outputting transmission signals; and the light detection end includes a light detector array 231, light detectors therein are used for detecting echo signals of the transmission signals.

When the transmission signals are emitted from the light transmission end 22 and the echo signals are received, they both pass through the window 21. Exemplarily, the window 21 can include a flat window. In other embodiments, this window 21 can also be a curved structure.

The transmitting lens 26 can be disposed in front of the light transmission end 22 for collimating and then transmitting the transmission signals of the light transmission end 22. For example, the transmitting lens 26 can be a lens group, or a plano-convex lens equivalent in the optical effect to the lens group, with its convex surface facing toward the light transmission end 22. The receiving lens 27 can be disposed in front of the light detection end 23 for converging the passing echo signals toward the light detection end 23. For example, the receiving lens 27 can be a lens group, or a plano-convex lens equivalent in the optical effect to the lens group, with its plane facing toward the light detection end 23.

The rotating member 24 can be controlled to rotate continuously, and it is shown in the example of FIG. 2 as a one-dimensional rotation in the transverse plane (schematically in the counterclockwise direction as indicated by the arrow in the figure), thereby it can achieve scanning of a horizontal field of view (relative to a direction of a vertical field of view). It can be understood that although in the above example, the scanning of the vertical field of view consistent with the height direction of the light detection device is implemented by light emitters disposed in a column direction, while the scanning of the horizontal field of view is implemented by the transverse one-dimensional rotation of the rotating member 24, this disclosure is not limited to this. In other specific instances, an orientation at which the light detection device is placed can also be changed, for example, by rotating 90 degree compared to FIG. 2, to implement the scanning of the vertical field of view, for example, through one-dimensional rotation of the rotating member 24, and to implement the scanning of the horizontal field of view by the light emitters disposed in a row direction, rather than in a column direction.

For example, the rotating member 24 can be sleeved outside a rotating shaft of a motor to rotate with it when the motor drives its rotating shaft to rotate. The rotating member 24 includes at least one reflecting surface used by the optical path of the transmission signal and the optical path of the echo signal. When there is only one reflecting surface, the optical path of the transmission signal and the optical path of the echo signal can share this reflecting surface; and when there are a plurality of reflecting surfaces, the optical path of the transmission signal and the optical path of the echo signal can also share the same reflecting surface of the rotating member 24, or the optical path of the transmission signal and the optical path of the echo signal can use different reflecting surfaces of the rotating member 24. In the example of FIG. 2, the rotating member 24 is shown as a rectangular body, and its two opposite vertical sides 241 and 242 can serve as reflecting surfaces. When the rotating member 24 rotates to a predetermined position, for example the position shown in the figure, one reflecting surface 241 deflects and transmits an transmission signal onto the window 21, and then the transmission signal passes through the window 21 to an environment outside the light detection device for detection; and if the transmission signal encounters an obstacle and generates an echo signal, the echo signal can reach the reflecting surface 241 through the window 21, and then reach the light detector along the optical path of the echo signal after being deflected by the reflecting surface 241.

The redirecting member 25, located in the optical path of the transmission signal and the optical path of the echo signal, is configured to output the transmission signal to the rotating member 24, and is formed with a passage portion for the echo signal to pass through. The redirecting refers to that a direction of an input optical signal can be changed to redetermine a transmission direction of an output optical signal by processing an optical signal, such as optical reflection, refraction, transmission, and so on. In the example of FIG. 2, the redirecting member 25 can be implemented as a reflector, which can have a reflecting surface 251. In the optical path of the transmission signal, the reflecting surface 251 is used for reflecting the transmission signal emitted by the light transmission end 22 onto the rotating member 24. When the rotating member 24 is located, for example, at the position in FIG. 2, its reflecting surface 251 may receive this transmission signal and deflect same to the window 21, the transmission signal then exits to the outside.

In FIG. 2, the passage portion is shown as gaps 28 located on both sides of the redirecting member 25, and the gaps 28 can be formed between the redirecting member 25 and an inner wall of the housing of the light detection device or other parts (e.g., a bracket) disposed within the housing. In the structure of the example in FIG. 2, in the optical path of the echo signal, the echo signal is reflected by one reflecting surface of the rotating member 24 and transmitted to the redirecting member 25, passes through the gaps 28 on the side of the redirecting member 25, and is received by the light detection end 23.

In FIG. 2, both the transmission signal and the echo signal pass through an optical path segment between the window 21 and the rotating member 24, namely, the optical path of the transmission signal and the optical path of the echo signal have an overlap between the window 21 and the rotating member 24. The overlap can refer to a coaxial optical path, i.e. two optical segments have an overlapping optical axis, as shown by M in the figure. It can be understood that both the transmission signal and the echo signal pass through the overlapping optical path segment within this light detection device. Such coaxial optical path structure can avoid the problem of short-range blind zone caused by a paraxial optical path structure (where the optical path of the transmission signal and the optical path of the echo signal completely do not overlap). Further, under the reflection action of the reflecting surface 251 of the redirecting member 25, the optical path of the transmission signal and the optical path of the echo signal have an overlap (i.e., being coaxial) in an optical path segment with an optical axis of N.

Specifically, the rotating member 24 can rotate continuously to send transmission signals and receive echo signals at different timings, or can rotate back and forth to send transmission signals and receive echo signals at different timings. It can be understood that the rotational speed of the rotating member 24, the number of reflecting surfaces, and the light emission switching speed of adjacent light emitters may affect the frame rate of the point cloud detection of the LiDAR, and various factors need to be coordinated to achieve the detection at a predetermined frame rate. When the detection frame rate is fixed, the greater the number of reflecting surfaces, the lower the required rotational speed. As can be known from this, the rotational speed of the rotating member 24 and the number of reflecting surfaces can be set according to actual detection needs. The number of reflecting surfaces may also be related to the structure of the rotating member 24, and the number can be at least two, for example, 2, 3, 4, or more. In specific examples, the rotating member 24 can be a prism. A cross section of the rotating member 24 can be an axially symmetrical or centrally symmetrical to send and receive optical signals uniformly along the timeline. For example, regarding the rotating member 24 of a prism in FIG. 2 with a rectangular cross section, its two opposite surfaces can be reflecting surfaces. Alternatively, the rotating member 24 is a prism with a cross section of square, and its four sides can all be reflecting surfaces.

In FIG. 3, there is shown a structural schematic diagram of a change in the shape of the rotating member in FIG. 2. In FIG. 3, the rotating member 34 as shown is a prism with a cross section of a regular triangle, and its three sides can all be reflecting surfaces. During the rotation process, the three reflecting surfaces can be used in turn for consecutive transmission of optical signals, and there is no side that is not used for optical signal transmission. It need be noted that in other examples, the rotating member can also be implemented as a prism with a polygonal cross section with more sides, which is not limited to the above examples.

It can be understood that FIGS. 1 to 3 above only schematically show the structures of several LiDAR, in order to facilitate readers' understanding of the possible application scenarios of the solution of this disclosure, rather than limiting its application to the LiDARs listed above. Specific explanation can be made below regarding the solution of reducing crosstalk among detection channels in this disclosure.

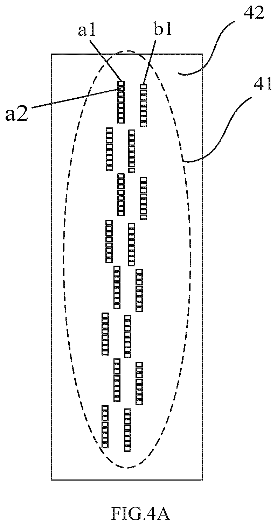

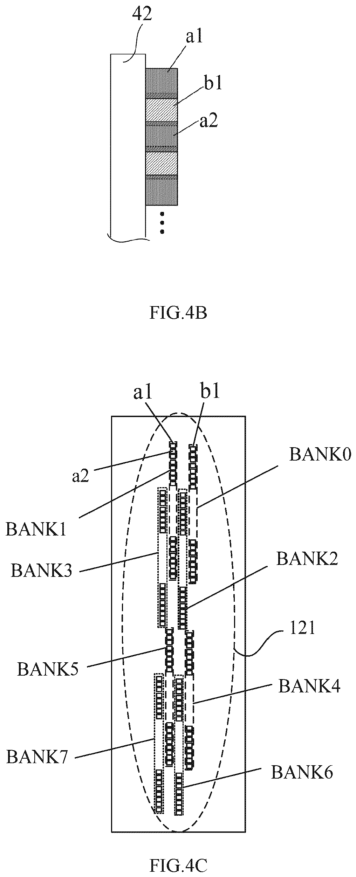

To clearly explain a structure where columns of light emitters are staggered relative to each other, please refer to FIGS. 4A and 4B together.

In FIG. 4A, there is shown a structural schematic diagram of a front-viewed arrangement of a light emitter array in an embodiment of this disclosure.

A light emitter array 41 is provided on a circuit board 42 (PCB). The light emitter array 41 can include N columns of light emitters staggered from one another, each column of light emitters extending along a first direction to achieve the scanning of a field of view in the first direction, where N is greater than 1. For example, the field of view in the first direction can be a vertical field of view of the light detection device. Optionally, the fields of view of adjacent light emitters in one column do not overlap with each other. Specifically, in one column of light emitters, each light emitter corresponds to one vertical field of view, and thus a combination of vertical fields of view of various light emitters in one column corresponds to the vertical field of view of this column of light emitters (the field of view of a row of light emitters can be obtained similarly), and a combination of vertical fields of view of various columns of light emitters corresponds to the vertical field of view of the light detection device. The number of light emitters depends on the vertical fields of view of the light detectors and the vertical field of view of each light emitter.

FIG. 4B shows a structural schematic diagram of a part of FIG. 4A in a left view. A column of light emitters on the left side is not aligned in the column direction with an adjacent column of light emitters on the right side, forming the staggered arrangement. Further, specifically, a first light emitter b1 in the column of light emitters on the right side is slightly lower than a1, while higher than a second light emitter a2 on the left side. Among them, the absolute value of the vertical field angle corresponding to a1 is greater than the absolute value of the vertical field angle corresponding to the light emitter b1, and the latter is greater than the absolute value of the vertical field angle corresponding to a2. For example, the vertical field of view of the LiDAR is from +30° to -30° (0° indicates a horizontal direction, a positive value indicates tilting upward, and a negative value indicates tilting downward), and if the vertical angular resolution of the LiDAR is 0.2°, then light emitted by a1 is shaped by a lens (group) and is then emitted toward an angle of -30°, namely, a1 corresponds to a vertical field of view of -30°; b1 corresponds to a vertical field of view of -29.8°; and a2 corresponds to a vertical field of view of -29.6°. The absolute values of the vertical field angles of a1, b1, and a2 are 30°, 29.8°, and 29.6°, wherein 30°>29.8°>29.6°, respectively. Regarding the so-called staggered arrangement, it can also be understood that non-overlap at least exists in partial field of view of each laser in a first direction (e.g., the vertical direction).

As can be seen from FIG. 4B, when viewed laterally, b1 fills a gap between a1 and a2 in the column direction, so as to enable light emitters to be distributed more densely in the column direction, which can thereby improve the vertical resolution of the light detection device. For example, in the array of light emitters in FIG. 4A, there is almost no overlap among the vertical fields of view of all light emitters in the column direction (corresponding to the vertical field of view), which, after being spliced, form the vertical field of view of the light detection device. Such arrangement can be considered as a 1D arrangement in the vertical direction (1D solid-state). Similarly, in other embodiments, adjacent rows of light emitters can also be arranged in a staggered manner in the row direction, which do not be explained more here.

On the one hand, the arrangement of linear array for the light emitter array 41 shown in FIG. 4A reduces the number of light emitters and reduces costs compared to, for example, a square array. On the other hand, the staggered structure between adjacent columns of light emitters in the linear array achieves a smaller size and higher resolution compared to a multiple columns of lasers aligned with each other.

As described in the above-mentioned embodiments, a plurality of detection channels are formed between the light emitter array 41 and the light detector array. During one round of transmission and reception of an optical signal, a plurality of light emitters in the light emitter array 41 are activated to emit light, and a plurality of light detectors in the light detector array are activated to perform detection, constituting a plurality of detection channels. During this process, there may be crosstalk formed among those detection channels operating together.

In order to reduce crosstalk among detection channels, in some embodiments, each row or column of light emitters can be divided into a plurality of banks of light emitters, each bank of light emitters including a plurality of light emitters corresponding to the plurality of detection channels respectively. During one signal transmission process, when the light emitter array 41 is operating, light emitters are selected respectively from various banks of light emitters to emit light, avoiding the situation where several light emitters in the same bank are operating at the same time. This can ensure that during the same signal transmission process, light emitters of different detection channels that are activated to operate have sufficient isolation space therebetween, namely, the space occupied by inactivated light emitter between two activated light emitters, thereby reducing crosstalk. Similarly, for the light detector array, it can also be divided into a plurality of banks of light detectors. During one signal transmission process, light detectors are selected respectively from different banks of light detectors to be activated, which can also form isolation space between light detectors of different detection channels that are activated to operate during the same signal transmission process, thereby reducing crosstalk.

Optionally, the above-mentioned grouping of the light emitter arrays 41 and respectively selecting the light emitters to be activated in a signal transmission process, and the grouping of the light detector arrays and respectively selecting the light detectors to be activated in a signal transmission process can be implemented alternatively or together. When implemented together, crosstalk between multiple detection channels (especially adjacent detection channels) operating together during a signal transmission process can be reduced more effectively.

The light detection device includes a controller or control module (implemented by, for example, FPGA, SoC, or other ASIC) that can be used for controlling light emission of various emitters in the light emitter array. Those skilled in the art can understand that the above-described manner of grouping the light emitter array 41 is actually achieved by selecting and controlling, by the control module, a plurality of predetermined light emitters to emit light at the same time (also described herein as "together"), in order to eliminate an overlap among the fields of view of the plurality of predetermined light emitters that emit light at the same time, to achieve the situation that the fields of view of the plurality of predetermined light emitters that emit light at the same time do not overlap within a detection distance of the light detection device.

In some embodiments, the plurality of light emitters of the bank of light emitters can be integrated on at least one chip through semiconductor technology. For example, the light emitter is a laser, then the chip is a laser chip. By integrating a plurality of light emitters on one chip, the problem of relatively large spacing between light emitters caused by separate packaging of a single light emitter can be avoided, which can achieve a highly integrated light emitter array and respective banks of light emitters, being beneficial for reducing the volume of light detection device and improving the beam density of the LiDAR.

In some other embodiments, the entire light emitting part can be integrated on one chip through semiconductor technology, the light emitters are divided into banks through circuit connection, and the emission sequence is controlled, which can further reduce costs and improve processing efficiency.

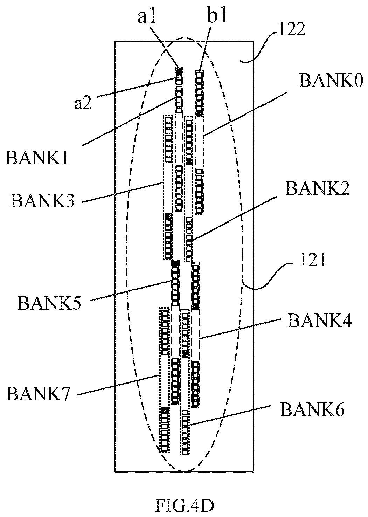

To simplify the description, a division of the light emitter array 41 into banks of light emitters is exemplified, illustrated, and explained below only. In FIG. 4C, there is shown a structural schematic diagram of a division into banks of light emitters according to the example structure of FIG. 4A. In this example, every eight light emitters arranged consecutively in the column direction are considered as one unit, and the two units in one column, namely, 16 light emitters, are considered as one bank of light emitters, forming a total of eight banks of light emitters, namely, Bank0-Bank7. As shown in FIG. 4D, during one transmission and reception of an optical signal, one light emitter in each Bank can be selected for activation, and then there are eight light emitters emitting light at the same time during one signal transmission process, which are represented by black blocks different from other blocks in the figure.

As can be seen, light emitters are grouped and selected to emit light respectively. The greater the number of light emitters contained in each bank of light emitters, the larger the isolation space between the activated light emitters.

It need be noted that the division manner of the banks of light emitters in FIG. 4C is merely an example, not the only. For example, one unit of eight light emitters arranged consecutively in the column direction in the figure can also be considered as one Bank, or three units or more than three units in a column can be considered as one Bank, or an indefinite number of light emitters as discretely arranged, for example, in different rows or positions can be considered as one Bank. The illustrated is not a limitation.

For example, adjacent rows of light emitter or banks of light emitter of light emitter columns may also be arranged in a staggered manner in the extension direction. For example, in the figure, when one unit is considered as one Bank, it can be seen that adjacent columns of Banks are arranged in a staggered manner in the column direction. This example is similar to the above-mentioned staggered arrangement of light emitters in adjacent columns or rows of light emitters for the purpose of increasing resolution.

In some examples, signal transmission processes in which various light emitters in each bank of light emitters and/or various light detectors in each bank of light detectors are activated are different; that is to say, each bank of light emitters has only one light emitter activated during one signal transmission process, and/or each bank of light detectors has only one light detector activated during one signal transmission process. Specifically, for example, during one signal transmission process, a1 in Bank0 is activated, b1 in Bank1 is activated, and one light emitter is respectively selected from other Banks for activation; during the next signal transmission process, a2 in Bank0 is activated, b3 in Bank1 is activated, and another one light emitter is respectively selected from other Banks for activation; and so on, until all the light emitters in each Bank have been activated, and then activated again in turn. In this way, a1 and a2 do not emit light together during one signal transmission process, and neither do b1 and b3.

Similarly, various light detectors in each bank of light detectors can also be activated in turn during different signal transmission processes. For example, light detectors i2 in the bank Bank9 of light detectors and a1 correspondingly constitute one detection channel therebetween, and i1 and a2 constitute one detection channel; and j1 in Bank10 and b1 constitute one detection channel, and j2 and b2 constitute one detection channel. When a1 and b1 are activated during a signal transmission process, i2 and j1 are also activated, and so on.

As shown in FIG. 4C, there are eight Banks, each Bank including 16 light emitters, and there are 128 light emitters in total. If one light emitter and one light detector constitute one detection channel, there are a total of 128 detection channels, that is to say, "128 beams". During each signal transmission process, eight out of 128 detection channels operate together, and all the detection channels are traversed after 16 signal transmission processes. Each light emitter can adopt a VCSEL, for example, which can achieve extremely high vertical resolution of about 0.2° in the case where the vertical field angle of the LiDAR reaches 25°.

The light emitter array shown in FIGS. 4A, 4B, and 4C is in the form of a linear array. The number of light emitters in the column or row direction corresponds to the size in the column or row direction. For example, in the figure, the size of the light emitter array in the column direction is significantly larger than the size in the row direction, namely, the ratio of the size in the column direction to the size in the row direction is 3 times or 5 times or more. Those skilled in the art can understand that, similarly, in other examples, it is also possible that the size of the light emitter array in the row direction is significantly larger than the size in the column direction. That is to say, when the light emitter array is a two-dimensional array, there is a significant difference between the sizes thereof in two dimensions, and the ratio between the sizes in the two dimensions is greater than 3, or greater than 5. The length of the sizes in the above dimension corresponds to the number of the light emitters, and also relates to the field angle and resolution in the corresponding dimension. The sizes in different dimensions can be selected according to the demands for the field angle and resolution. It can be understood that the size ratio set above is not only used to a two-dimension light emitter array, but also to a one-dimension light emitter array, their difference lying in that the size ratio in the two-dimension light emitter array may be N: M, while that in the one-dimension light emitter array is N: 1.

In specific application scenarios, the light detection device can be implemented as a LiDAR applied to a travelling carrier (e.g., a car). Typically, in the field of LiDAR, one detection result (e.g., one point cloud map) can be obtained from every detection, and the point cloud map covers the entire horizontal and vertical fields of view.

In a road driving scenario, for example, obstacles may be people or vehicles on the road, and these are very important for autonomous driving. Among the various detection channels of the LiDAR, the fields of view of the middle detection channels can cover more people or vehicles on the road; the closer the detection channel is to the margin, the farther away it is from the obstacles on the road. It can be understood that the light emitters in the middle region of the light emitter array belong to the middle detection channels, and the light emitters in the margin region of the light emitter array belong to the marginal detection channels.

To improve the effect of detecting obstacles at a short range, in addition to long-range measurement (e.g., 150m), the LiDAR can emit additional light for short-range measurement (e.g., 3m) during a detection (such as detection corresponding to a horizontal FOV angle), and the long-range measurement and short-range measurement results are combined together to obtain the detection result. In a specific example, the short-range measurement and long-range measurement actions can be implemented through different ToF windows respectively. The ToF window refers to a range of time of flight, and it is calculated as t=2×d/c, where t is the time of flight from when the light emitter sends out the transmission signal to when the echo signal is received, d is the distance to the obstacle, c is the speed of light, and 2 times d represents the round-trip distance of the transmission signal and the echo signal. For example, when detecting an object at a distance of 150 meters, it is limited to only receiving echo signals obtained within the possible predetermined range of time of flight corresponding to a distance of 150 meters. Echo signals above or below this predetermined range of time of flight are excluded.

In one embodiment, long-range measurement and short-range measurement are complementary in distance. For example, a distance for long-range measurement is set beyond 3 meters, while a distance for short-range measurement is set within 3 meters. In other embodiments, there may be a small overlap between the distances for long-range and short-range measurements. For example, if the long-range measurement is designed to cover the distance beyond 3 meters while the short-range measurement is designed to cover the distance within 5 meters, there is an overlapping detection distance of 2 meters between the long-range measurement and the short-range measurement.

In possible examples, the distance corresponding to the long-range measurement action may be 100 meters to 150 meters, or 150 meters to 200 meters, or 200 meters to 250 meters; the distance corresponding to the short-range measurement action may be 3 meters to 5 meters, 5 meters to 10 meters, etc. Because lasers emitted by different light emitters are emitted at different angles, the spacing between different emitted laser beams increases in case of a long distance. Therefore, at the time of performing the long-range measurement action, it is necessary to use more dense light emitters to ensure the density of the point cloud. At the time of short-range measurement, the density and number of light emitters can be reduced correspondingly.

In possible examples, partially or wholly repeated detection channels may be used between the short-range measurement action and the long-range measurement action. For example, the light emitters in the middle area of the light emitter array in the first direction are used for long-range measurement of 250 meters and short-range measurement of 3 meters. In the case of long-range measurement as the primary and short-range measurement as the supplement, the frequency of actions in each detection and the resource allocation of the detection channel can be tilted towards the long-range measurement action. For example, a short-range measurement action is performed after every 4 long-range measurement actions, or the like.

In possible examples, for short-range measurements, a smaller number of light emitters are used, and the corresponding number of detection channels is also reduced accordingly. For example, only the channels near the middle area among the eight Banks are selected for short-range measurement. For example, part of the light emitters, the number of which is smaller than 128, such as 40 light emitters, may be selected, and if each light emitter corresponds to a detection channel, there can be 40 detection channels, which are polled in sequence to perform short-range measurement action. Optionally, there is also a difference in the polling method of the channel between the short-range measurement action and the long-range measurement action. For example, during a signal transmission process for each long-range measurement action, multiple Banks in the middle area (such as BANK2, BANK3, BANK4, and BANK5 in FIG. 4D) select light emitters of one channel to operate together. During the signal transmission process of the short-range measurement action, among the multiple banks in the middle area, only one channel in one bank is selected to operate.

In possible examples, the long-range measurement action corresponds to multiple detection distances, such as 150 meters and 250 meters. If the position of the activated light emitter in the light emitter array is closer to the center, the corresponding expected detection distance is further. That is, the expected detection time window is wider. For example, in FIG. 4C, the light emitter closer to the middle of the middle area in the vertical direction provides a ranging time window of 250 meters (window t = 2 × d/c), and is expected to detect up to 250m; the light emitter at the relative margin provides a ranging time window of 150 meters and is expected to detect up to 150m.

The above-mentioned activation methods of light emitters are only some examples and do not limit their possibilities of implementation. For example, in other examples, multiple light emitters can be configured to correspond to a vertical field of view (such as in the same row), but these multiple light transmitting units do not emit light simultaneously (such as emitting light in turn), which can increase their respective lifespans and reliability.

In some embodiments, by configuring the light emitter array and the driving mode of the corresponding driving circuit, each light emitter can be controlled individually. Thus, each light emitter can be polled to emit light, or all light emitters can emit light together or in any other combination. For example, each light emitter in the light emitter array can be polled in any order, interval, signal characteristics (such as one or more combinations of wavelength, pulse width, pulse number, pulse peak and inter-pulse time interval) and/or the like to achieve flexible electronic scanning (e-scanning).

In some examples, in order to reduce crosstalk between detection channels, signal characteristics between optical signals transmitted in various detection channels operating in the same signal transmission process are not totally identical. Among them, the optical signal transmitted in each detection channel includes the transmission signal and the corresponding echo signal. The light detection device may also include a control module (implemented by FPGA, SoC or other ASIC), which may be configured to determine based on signal characteristics the detection channel to which the signal belongs.

Specifically, the light detector converts the received optical signal into an electrical signal, and can pass it to the control module after certain signal processing (such as filtering, analog-to-digital conversion, etc.). The control module can determine whether the signal characteristics of the echo signal match the signal characteristics of the transmission signal of the light emitter of the corresponding detection channel, and when matching, the echo signal is used for the corresponding detection channel to calculate the detection results, such as calculating the distance from the object, etc. In specific examples, the control module may be implemented by, for example, a microcontroller unit (MCU), a programmable gate array (FPGA), or a system on a chip (SoC).

In some examples, each light emitter is activated by a drive signal from a drive circuit, which may be generated by the drive circuit of the light emitter. Optionally, the driving signal may include one or more electrical pulse signals (e.g., periodic pulse signals), and then the transmission signal of the light emitter may also include one or more optical pulse signals. In corresponding examples, the dimensions of the signal characteristics may include any one of or any combination of wavelength, pulse width, pulse number, pulse peak, and inter-pulse time interval.

Optionally, based on an example where light emitters within the same BANK may emit light not during the same signal transmission process, in consideration of simplified calculation, the signal characteristics of various light emitters within the same BANK can be set to be the same, so that each BANK has its own unique and distinct signal characteristics.

The principles of signal characteristics in various dimensions are explained through instances.

In the example in which wavelength is used as the signal characteristic, the wavelengths of the signals emitted by each bank of light emitters are not exactly the same. Further, the optical wavelengths of the signals emitted by the light emitters operating in the same signal transmission process are different. As an example, BANK0, BANK1, BANK2, and BANK3 each have one light emitter to emit signals in the same signal transmission process. BANK0 is configured to include multiple light emitters that emit optical signals with wavelength of λ0, and BANK1 to BANK3 are respectively configured to include light emitters that emit optical signals with wavelengths of λ1 to λ3, where λ0≠λ1≠λ2≠λ3. Therefore, in each signal transmission process, one light emitter is respectively selected from the four Banks to emit optical signals, and the wavelengths of the signals emitted by the four light emitters that emit signals together in any signal transmission process are different.

Further, in the light detector array, a bank of light detectors corresponding to the bank of light emitters is provided, and a filter or filtering unit can be provided upstream the optical path of each light detector in each bank of light detectors. Each filtering unit can be configured to allow only the echo signal of the wavelength corresponding to this detection channel to pass, thereby filtering out the echo signals of other detection channels and ambient light interference.

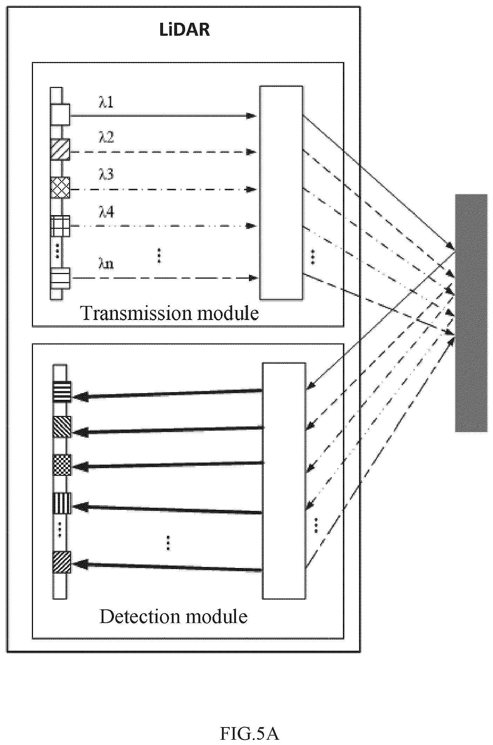

As another example, as shown in FIG. 5A, it is assumed that the light emitter array is divided into n banks of light emitters. Each bank of light emitters emits signals with different wavelengths, which are λ1 to λn respectively. Thus, in the light emitter array, it is suitable to emit at most n transmission signals together. When a light emitter is selected for activation from any number of banks of light emitters among the n banks of light emitters, the multiple light emitters emitting together can emit signal beams of different wavelengths. When n banks of light emitters are selected for activation together, one light emitter is selected from each bank of light emitters to transmit a signal for detection during one transmission and reception of an optical signal. The beam of the transmission signal is emitted through the transmitting lens, and an echo signal is formed after it is reflected by an object. The wavelength of each echo signal is the same as the corresponding incident transmission signal, which is also λ1 to λn. The n echo signals return to the light detection device through the window and are sent to the light detector array through the receiving lens. In the light detector array, n banks of light detectors can be provided corresponding to n banks of light emitters, and a filtering unit can be provided in front of each light detector in each bank of light detectors. Each of the filtering units can be configured to allow only the echo signal of the wavelength corresponding to this detection channel to pass, and in one transmission of an optical signal, one light detector is selected from each bank of light detectors to be activated, so that n echo signals can be detected by n light detectors respectively without detecting echo signals of other wavelengths, thus reducing interference.

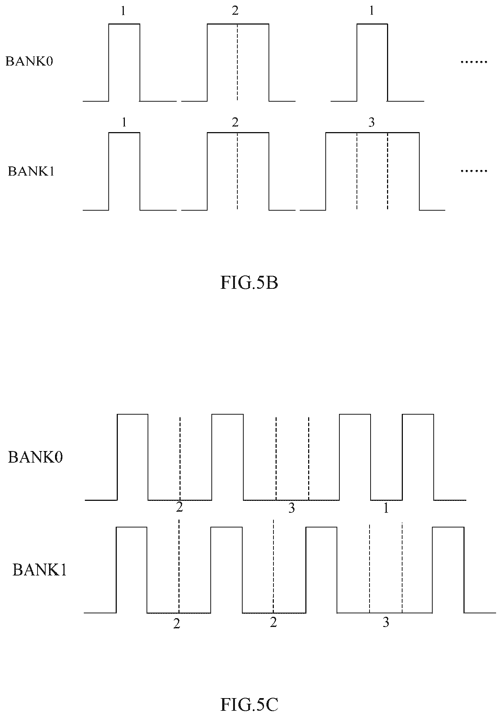

In the example in which pulse width is used as a signal characteristic, each transmission signal can contain multiple pulses, and the ratio of their pulse widths can be configured to be different, such as 2:3:1:...., as the signal characteristic of this transmission signal (can be encoded to obtain signal characteristic encoding). During the same signal transmission process, the ratios of pulse width of the transmission signals of different detection channels operating together are different. As an example, this can be achieved by using different ratios of pulse width for different banks. For example, as shown in FIG. 5B, the multiple consecutive pulses contained in the transmission signal of each light emitter in BANK0 use the ratio of pulse width of 1:2:1:..., the multiple pulses contained in the transmission signal of each light emitter in BANK1 use the ratio of pulse width of 1:2:3:..., and the ratios of pulse width of other banks are also different. During the same signal transmission process, the ratios of pulse width of the transmission signals from the light emitters selected from different banks are different from each other, so that the ratios of pulse width of the echo signals generated by them respectively are also different. By determining whether the ratio of pulse width of the echo signal is the same as the ratio of pulse width of the transmission signal of this detection channel, it can be determined whether the echo signal belongs to this detection channel. When the ratio of pulse width of the echo signal is different from the ratio of pulse width of the transmission signal of this detection channel, it is filtered out as an interference signal. Therefore, different pulse widths are used as signal characteristics to distinguish the echo signal correspondence of different detection channels.

In the example in which the inter-pulse time interval is used as a signal characteristic, during the same signal transmission process, the transmission signals of different detection channels operating together have different ratios of the inter-pulse time interval. As an example, this can be achieved by setting different ratios of inter-pulse time intervals of transmission signals for different banks. For example, as shown in FIG. 5C, the ratio of pulse time interval of multiple consecutive pulses contained in the transmission signal of the light emitters in BANK0 is 2:3:1:..., and the ratio of pulse time interval of multiple consecutive pulses contained in the transmission signal of the light emitters in BANK1 is 2:2:3.... Therefore, the ratio of pulse time interval of the respective echo signals generated is also different. The correspondence of echo signals of different detection channels can be distinguished by determining whether the ratio of inter-pulse time interval of the echo signal is consistent with the ratio of inter-pulse time interval of the transmission signal of this detection channel.

In the example in which the number of pulses is used as a signal characteristic, during the same signal transmission process, the transmission signals of different detection channels operating together contain different numbers of pulses. As an example, the transmission signals of light emitters of different Banks contain different numbers of pulses, and thus the number of pulses of the respective echo signals generated is also different. The correspondence of echo signals of different detection channels can be distinguished by determining whether the number of pulses of the echo signal is the same as the number of pulses of the transmission signal of this detection channel.

In the example in which the pulse peak (corresponding to the peak of the light intensity or the peak converted into an electrical signal) is used as the signal characteristic, during the same signal transmission process, the ratios of peak intensity of multiple pulses contained in the transmission signals of different detection channels operating together are different. As an example, this is achieved by setting different ratios of pulse peak intensity of multiple pulses included in the transmission signals of light emitters of different banks. For example, the ratio of pulse peak of multiple pulses included in the transmission signal of the light emitters in BANK0 is X:Y:Z:..., and the ratio of pulse peak of one or more pulses included in the transmission signal of the light emitters in BANK1 are W:X:Y.... Therefore, the ratios of pulse peak of the respective echo signals generated are also different. The correspondence of echo signals of different detection channels can be distinguished by determining whether the ratio of pulse peak intensity of the echo signal is consistent with the ratio of pulse peak intensity of the transmission signal of this detection channel.

Additionally, the above-described signal characteristics can also be combined to generate signal characteristics of optical signals in different detection channels.

It should be noted that regarding the above ratios, such as ratio of pulse width, ratio of inter-pulse time interval, and ratio of pulse peak intensity, those integer ratios are only given for illustration. In practical application, the above ratios can be any values.

It can be understood that in one or more of the various embodiments in which the respective detection channels are distinguished by signal characteristics, the light detection device may be a LiDAR, and any one or any combination of lasers (the lasers can be addressed) may be polled and freely selected to achieve detection and scanning with high degree of freedom, thereby achieving at least objects in multiple aspects.

On the one hand, free selection of detection objects and areas can be achieved. Specifically, when the light detection device is a LiDAR, it can be mounted on, for example, a traveling vehicle (such as an intelligent driving car, etc.) and then perform detection. If a specific object or area of interest is identified based on the point cloud data of a certain scanning, it is possible to activate/scan only this specific object or area of interest via free addressing when it is necessary to perform scanning again next time, which is applicable in implementations such as scanning of specific objects or areas of interest with higher density.

On the other hand, crosstalk of detection channel may be reduced. Since the specific area to be irradiated or to be scanned may be freely selected, lasers with as large a physical spacing as possible can be selected to emit light in the same signal transmission process during detection as shown in the embodiment shown in FIG. 4D, which significantly reduces crosstalk between detection channels. Compared with the current LiDAR products, the better signal-to-noise ratio and detection effect can be achieved.

Further, the number of detections required to collect point cloud data can be reduced, thereby reducing the overall power consumption of the light detection device. Under the technical trend of increasing number of beams, the larger the number of beams, the more energy is consumed, which causes additional problems in terms of heat dissipation and reliability.

In the above-described examples, various light emitters in the light emitter array can be activated by a driving control signal of the driving circuit. For example, a signal characteristic of a transmission signal from each light emitter can be determined by a signal characteristic of a driving control signal.

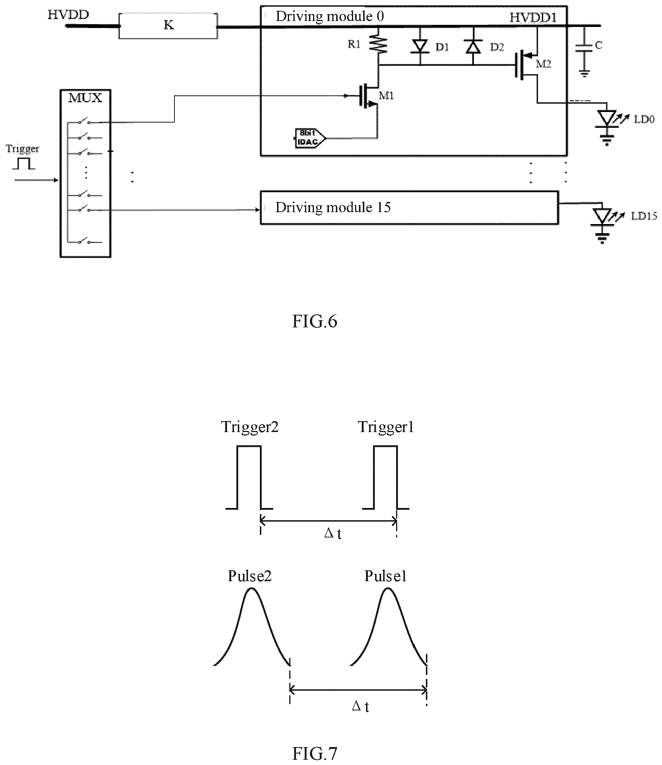

As shown in FIG. 6, there is shown a schematic diagram of a circuit structure of a driving circuit of the light emitter array in an embodiment of this disclosure.

The driving circuit includes:
driving modules respectively and correspondingly belonging to light emitters of each detection channel; and
a multiplexer MUX including an input end and a plurality of output ends; the input end is used for inputting a driving signal Trigger for controlling the driving module to activate a light emitter; and the plurality of output ends are correspondingly connected to various driving modules one by one to be selected to be in communication with the input end and to output the driving signal.

In the diagram, the number of driving modules is schematically shown as 16 corresponding to detection channels 0-15, which are labeled as driving modules 0-15. A structure of the driving module 0 is shown schematically in the figure, and other driving modules can have the same structure. The light emitters in the 16 detection channels are labeled as LD0~LD15.

The driving module includes: an NMOS transistor M1, a PMOS transistor M2, a resistor R1, a high-voltage diode D1, a voltage regulator diode D2, and an energy storage capacitor C.

Provided is a power supply line connected to a power supply voltage HVDD, a line control unit K (which can be implemented as a switch) is connected in series in the power supply line, and includes an input end connected to the HVDD, and an output end outputting HVDD1; the output end of the line control unit K is respectively connected to R1, an anode of D1, a cathode of D2, and a source of M2; the other end of the resistor R1 is connected to a drain of M1, and a gate of M1 is connected to one output end of the multiplexer MUX to be ON or OFF under the control of the Trigger; D1, D2, and R1 are connected in parallel, a cathode of D1 and a anode of D2 are connected to the drain of M1 and a gate of M2; a drain of M2 is connected to one end of a light emitter, and the other end of the light emitter is grounded. The capacitor C has one end connected to the power supply line and the other end grounded.

Optionally, a source of M1 can be used for inputting a control signal, such as an 8-bit digital signal. The source of M1 can be connected to an output end of an interim digital analog converter (IDAC), and the control signal is input to an input end of the interim digital analog converter to be converted into an analog voltage to be applied to the source of M1. The ON and OFF states of M1 and M2 are controlled by a level control signal Vgs of the analog voltage corresponding to the control signal. Alternatively, the source of M1 can also be directly connected to a low potential, for example, being grounded.

In a non-operational state, the line control unit K is ON, setting HVDD1 equal to HVDD; M1 is cutoff, causing HVDD to be applied on the gate of M2; and M2 is also cutoff, so that the light emitter LD0 does not emit light.

In an operational state, Trigger selects the detection channel 0 through the multiplexer, namely gating the driving module 0. When the Trigger is at a high potential, the corresponding line control unit K disconnects the power supply from HVDD; if the source of M1 is at a low potential, the Trigger controls M1 to be ON and pulls down the voltage of the gate of M2 to cause M2 to be ON. C begins to discharge to maintain HVDD1, and correspondingly, a driving current is generated at the drain of M2 to flow through the light emitter LD0, driving the same to emit light.

When the operational state switches back to the non-operational state, C continues to charge, M1 and M2 are cutoff, and the light emitter LD0 does not emit light.

In some examples, the charging speed of the capacitor is relatively slow compared to the switching of the operational state of the light emitter. In order to support the multi-pulse light emission of the light emitter (driven by the Trigger which is a multi-pulse signal), a capacitor C with a relatively large capacitance can be used, so that each light emission only requires the capacitor to release a small amount of stored electricity to drive the light emitter to emit light. In this way, even if the capacitor cannot be recharged with the consumed power within an interval time Δt between two light emissions, the remaining power can still be used to drive the laser to emit light again. Since the discharging current of the capacitor decreases with the reduction of the power, in order to avoid too small discharging current (the driving current for the laser) caused by low power remaining in the capacitor when light is emitted again, the capacitance of the capacitor C, optionally, can be set in such a manner that the predetermined number of discharges can be performed. For example, a discharge amount required for one driven light emission accounts for less than 10% of the total power storage of the capacitor C.

As can be known from this, through the driving signal Trigger as a multi-pulse signal, a transmission signal of the light emitter can be controlled to be in a corresponding multi-pulse signal form, namely, the signal characteristics of Trigger are related to, for example, consistent with, the signal characteristics of the transmission signal. Further, by setting the signal characteristics of Triggers in different detection channels to be different, it is possible to effectuate the difference among transmission signals in different detection channels, and the transmission signals and echo signals have consistent signal characteristics, which then achieves that the signal characteristics of optical signals in different detection channels are different, thereby achieving that the detection channels to which the echo signals belong can be discriminated according to the signal characteristics to reduce crosstalk among the detection channels.

Corresponding to the above-mentioned example where pulse number was used as a signal characteristic, such as the example of the dual pulses shown in FIG. 7, the light emitter is first driven by Trigger1 to generate a pulse signal pulse1; after an interval Δt, the laser is then driven again by Trigger2 to emit a pulse pulse2. The pulse number of a plurality of channels that emit light together can vary, namely, light emitters in different channels are driven by different numbers of Trigger signals to send light transmission signals having different numbers of pulses.

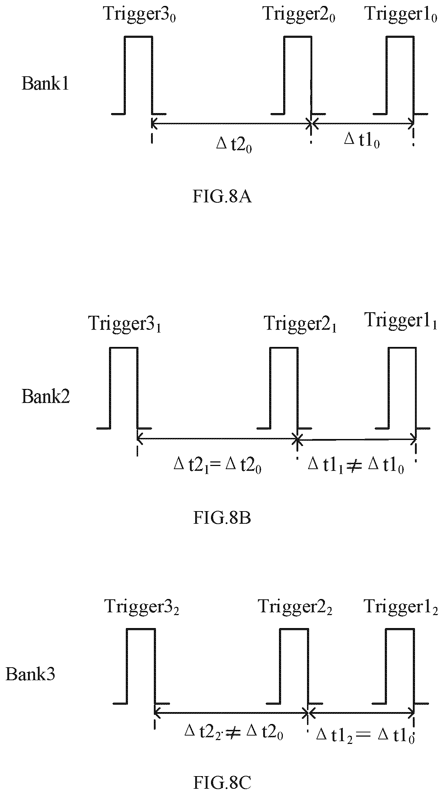

Corresponding to the above-mentioned example where pulse time interval was used as a signal characteristic, reference can be made to FIGS. 7, 8A to 8D.

The pulse time interval between a plurality of pulse signals contained in the light emitter's signal is determined by the time interval of the Trigger signal. Hence, different time sequence encoding can be used to the Trigger signals corresponding to a plurality of light emitters that emit light together. In FIGS. 7 and 8A to 8D, for example, a time interval of light pulses is obtained according to the time interval between the rising edges of adjacent Trigger pulses, with the corresponding time axis (not shown) in a direction from the right to the left, representing time from the past to this disclosure.

For example, light emitters belonging to different detection channels send transmission signals having, for example, the dual pulses in FIG. 7, but the transmission signals in different detection channels are different from one other in Δt to distinguish their echo signals.

Alternatively, in FIGS. 8A to 8D, possible pulse encoding forms of driving signals Trigger for BANK1 to BANK4 corresponding to different detection channels are shown respectively. In the diagrams, as an example, they show that the Trigger for each detection channel contains 3 pulses.

Specifically, in FIG. 8A, Trigger for BANK1 includes three pulse signals: Trigger3₀, Trigger2₀, and Trigger1₀, a pulse time interval between Trigger3₀ and Trigger2₀ is Δt2₀, and a pulse time interval between Trigger2₀ and Trigger1₀ is Δt1₀.

In FIG. 8B, Trigger for BANK2 includes three pulse signals: Trigger3i, Trigger2i, and Trigger1₁, a pulse time interval between Trigger3i and Trigger2₁ is Δt2₁ that equals to Δt2₀, and a pulse time interval between Trigger2₀ and Trigger1₀ is Δt1₁ that does not equal to Δt1₀.

In FIG. 8C, Trigger for BANK3 includes three pulse signals: Trigger3₂, Trigger2₂, and Trigger1₂, a pulse time interval between Trigger3₂ and Trigger2z is Δt2₁ that does not equal to Δt2₀, and a pulse time interval between Trigger2z and Trigger1₂ is Δt1₁ that equals to Δt1₀.

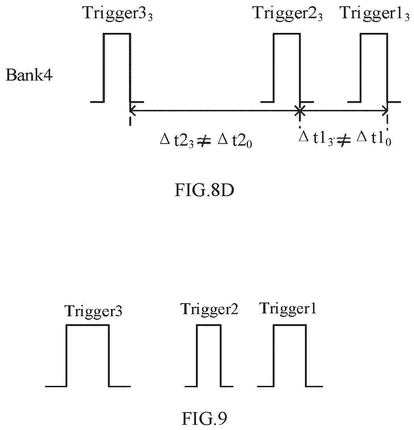

In FIG. 8D, Trigger for BANK4 includes three pulse signals: Trigger3₃, Trigger2₃, and Trigger1₃, a pulse time interval between Trigger3₃ and Trigger2₃ is Δt2₃ that does not equal to Δt2₀, and a pulse time interval between Trigger2z and Trigger1₂ is Δt1₃ that does not equal to Δt1₀.

Thus, it can be seen that ratios of pulse time interval among respective multiple pulses into which the optical transmission signals of the four detection channels are encoded are not completely the same, and they can be different from one another in Δt₁, in Δt₂, in either of Δt₁ and Δt₂, or in both Δt₁ and Δt₂.

Corresponding to the above-mentioned example where pulse width was used as a signal characteristic, the ratio of pulse width of a plurality of pulse signals in Triggers for different detection channels can be different. The pulse width of a pulse signal contained in a transmission signal varies with the pulse width of the signal Trigger, and the pulse width of the signal Trigger can be positively related with that of the transmission signal. Therefore, by changing the pulse width of the signal Trigger, multiple pulses emitted by a laser can have pulse width encoding, as shown in FIG. 9. FIG. 9 schematically shows a waveform schematic diagram of Triggers for one detection channel, which includes three pulse signals: Trigger1, Trigger2 and Trigger3, with an adjustable ratio of pulse widths among them.

It need be noted that although there may be pulse broadening and other changes in an echo signal, the pulse widths of a plurality of pulse signals of echo signals reflected by the same target object should vary proportionally. Thus, according to the ratio of pulse widths among the plurality of pulse signals of the echo signals, it can be determined whether they are effective echoes.

Corresponding to the above-mentioned example where intensity encoding was used as a signal characteristic, its principle is similar to that of the pulse width encoding. A light emitter sends a transmission signal containing a plurality of pulses with a certain ratio of intensities, while the ratio of signal intensities of the plurality of pulses sent by a plurality of lasers that emit light together are different. By determining a ratio of intensities of multiple pulses in an echo, it is determined whether the echo is an effective echo.

Moreover, signal characteristics corresponding to different dimensions mentioned above can be combined by, for example, making certain detection channels emit dual pulses, while certain channels emit triple pulses, with several detection channels that emit dual pulses performing time sequence encoding, pulse width encoding, intensity encoding, etc. between the dual pulses, and several detection channels that emit triple pulses also performing time sequence encoding, pulse width encoding, intensity encoding, etc. among the triple pulses, thereby enabling the combined signal characteristics corresponding to a plurality of channels operating together to be different from one another.

Additionally, in order to further prevent crosstalk, in some embodiments, the control module in the light detection device can also perform two or more consecutive signal transmission processes of "emission of transmission signals-reception of echo signals" for the same detection channel, and compare the time of flight (TOF) values calculated from multiple (e.g., two) measurements. When the TOF values obtained from multiple measurements match (which can be the same or have an error lower than a predetermined threshold), it is determined that the detection result for this detection channel is effective; otherwise, it is determined that this detection channel has been subjected to crosstalk and the detection result is discarded.

The above-described embodiments are only illustrative explanations of the principles and efficacy of this disclosure, and are not intended to limit this disclosure. Anyone familiar with this technology may modify or change the above-described embodiments without going against the spirit and scope of this disclosure. Therefore, all equivalent modifications or changes made by those with ordinary knowledge in the relevant technical field without departing from the spirit and technical ideas disclosed in this disclosure should still be covered by the claims of this disclosure.

## Claims

1. A light detection device, comprising:
a light emitter array, comprising a plurality of light emitters, the light emitters configured to output transmission signals;
a light detector array, comprising a plurality of light detectors, the light detectors configured to detect echo signals of the transmission signals reflected off an obstacle; wherein the light emitter array and the light detector array constitute a plurality of detection channels, and each detection channel comprises at least one light emitter and at least one light detector; and
a control module, wherein during one signal transmission process from outputting the transmission signal to detecting a corresponding echo signal, the control module selects a plurality of predetermined light emitters to emit light in parallel, and the fields of view of the plurality of light emitters that emit light in parallel do not overlap within a detection distance.

2. The light detection device according to claim 1, wherein the light emitter array is a one-dimensional array or a two-dimensional array; wherein when the light emitter array is a two-dimensional array, a ratio between sizes thereof in two dimensions is greater than 3, or greater than 5.

3. The light detection device according to claim 1, wherein a plurality of detection channels in an operational state are formed between the plurality of activated light emitters in the light emitter array and a plurality of activated light detectors in the light detector array; the light emitter array comprises a plurality of banks of light emitters and/or the light detector array comprises a plurality of banks light detectors; and the activated light emitters respectively belong to different banks of light emitters and/or the activated light detectors respectively belong to different banks of light detectors.

4. The light detection device according to claim 1, wherein various light emitters in each bank of light emitters and/or various light detectors in each bank of light detectors are activated in turn during a plurality of signal transmission processes.

5. The light detection device according to claim 1, wherein there is a first isolation range between two light emitters in the same bank of light emitters; and/or, a second isolation range is formed between activated light detectors in two adjacent banks of light detectors during the same signal transmission process.

6. The light detection device according to claim 1, wherein each bank of light emitters comprises a preset number of light emitters, and a plurality of light emitters in the bank of light emitters are integrated on at least one chip.

7. The light detection device according to claim 1, wherein a plurality of light emitters in the bank of light emitters are coupled to at least one selection unit, the selection unit is configured to select the light emitter according to an external signal.

8. The light detection device according to claim 1, wherein the light emitter array comprises N columns of light emitters staggered from one another, each column of light emitters extending in a first direction, with N greater than 1; and/or, the light detector array comprises M columns of light detectors staggered from one another, each column of light detectors extending in the first direction, with M greater than 1.

9. The light detection device according to claim 1, wherein during the same signal transmission process, signal characteristics of optical signals transmitted in various detection channels are not completely the same.

10. The light detection device according to claim 9, wherein the control module is configured to determine whether the signal characteristic of the echo signal detected by the light detector matches a signal characteristic of a transmission signal of the light emitter in the detection channel which the light detector belongs, and use the echo signal in the detection channel for calculating a distance from a target object when matching.

11. The light detection device according to claim 9, wherein the transmission signal emitted by the light emitter includes one or more pulse signals; dimensions of the signal characteristics include one or any combination of wavelength, pulse width, pulse number, pulse peak, and inter-pulse time interval.

12. The light detection device according to claim 11, wherein a signal characteristic in a dimension of pulse width comprise: a ratio of pulse widths of a plurality of pulses, which is used to determine whether the signal characteristic of the echo signal matches the signal characteristic of the transmission signal based on a ratio of pulse widths of a plurality of pulses.

13. The light detection device according to claim 9, wherein a signal characteristic in a dimension of signal intensity comprise: a ratio of intensities of a plurality of pulses, which is used to determine whether the signal characteristic of the echo signal matches the signal characteristic of the transmission signal.

14. The light detection device according to claim 1, wherein wavelengths of transmission signals by light emitters in different operating detection channels during the same signal transmission process are different; and a filtering unit is disposed in front of light detector in the different operating detection channels, the filtering unit only allows the echo signal of a wavelength corresponding to this detection channel to pass through.

15. The light detection device according to claim 1, further comprising a control module configured to control the light emitter array and the light detector array to consecutively perform multiple detections for one detection channel during one transmission process to obtain ToF values, and compare the ToF values obtained in multiple detections to determine that a detection result for the detection channel is effective when the ToF values match upon comparison; otherwise, to discard the detection result.

16. The light detection device according to claim 1, wherein the light detection device comprises a LiDAR.

17. A method for performing light detection by a light detection device according to any one of claims 1 to 16, the method comprising:
activating a plurality of light emitters in the light emitter array to send transmission signals; and
activating a plurality of light detectors in the light detector array;
wherein the plurality of activated light emitters form a plurality of detection channels in an operational state with a plurality of activated light detectors; and the activated light emitters respectively belong to different banks of light emitters and/or the activated light detectors respectively belong to different banks of light detectors.
